# EUROPÄISCHE PATENTANMELDUNG

(11) **EP 1 727 339 A1**
(43) Veröffentlichungstag der Anmeldung: **29.11.2006**
(21) Anmeldenummer: 06010504.6
(22) Anmeldetag: 22.05.2006
(51) Int. Cl.: H04M 3/22

(54) **System und Verfahren zum Prüfen sowie Verschalten von Teilnehmerleitungen mit Dienstleitungen mittels individuell aktivierbaren Teilnehmerabschlüssen**

(30) Priorität: 25.05.2005 DE 102005024117
(71) Anmelder: Vierling Communications GmbH, 91320 Ebermannstadt (DE)
(72) Erfinder: Steger, Bernhard, 96158 Frensdorf (DE)
(74) Vertreter: Beetz & Partner

(57) **Zusammenfassung**

Die vorliegende Erfindung betrifft ein Teilnehmeranschlusssystem, mit mehreren Teilnehmerleitungen für mehrere Teilnehmer, die jeweils teilnehmerseitig einen individuell identifizierbaren Abschluss aufweisen, mehreren Dienstleitungen, die jeweils mit einer Teilnehmerleitung verbindbar sind, einer Schaltmatrix, die das verändliche Verbinden von Dienstleitungen und Teilnehmerleitungen erlaubt, und einer Steuereinrichtung zum Steuern der Schaltmatrix. Das Teilnehmeranschlusssystem weist eine erste Aktivierungsschaltung auf, die mit einer Teilnehmerleitung zum Aktivieren ihres individuell identifizierbaren Abschlusses verbindbar ist, wobei die Verbindung der ersten Aktivierungsschaltung mit der Teilnehmerleitung über die Schaltmatrix erfolgt.

## Beschreibung

Die Erfindung betrifft ein Teilnehmeranschlusssystem, einen Abschluss für eine Teilnehmerleitung eines Teilnehmeranschlusssystems, ein Verfahren zum Prüfen einer Teilnehmerleitung eines Teilnehmeranschlusssystems, und ein Verfahren zum Verschalten einer Teilnehmerleitung mit einer Dienstleitung eines Teilnehmeranschlusssystems nach den Oberbegriffen der unabhängigen Patentansprüche.

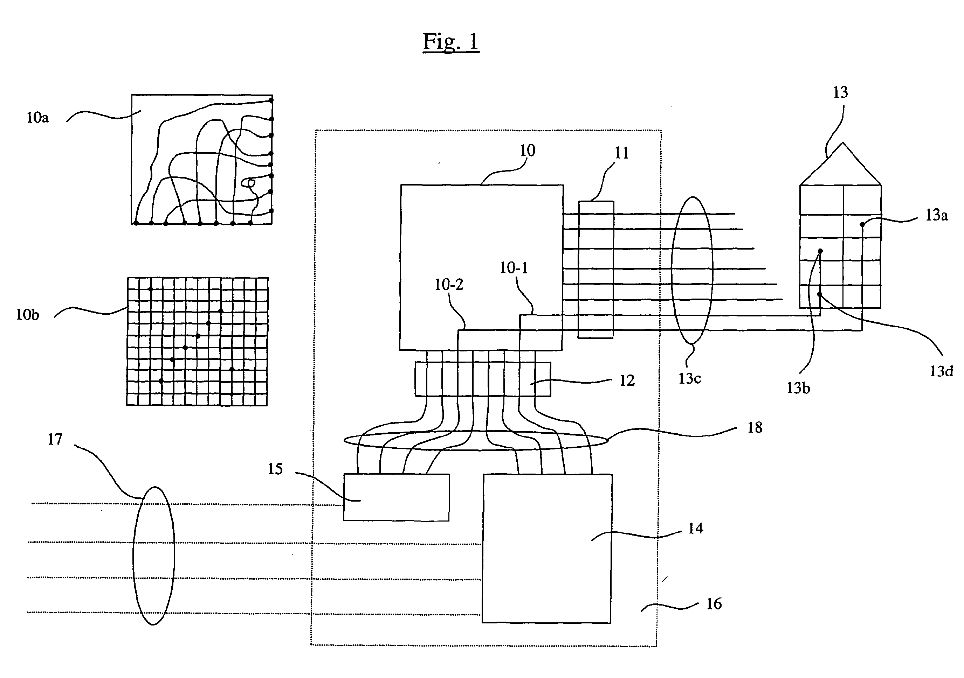

Fig. 1 zeigt ein herkömmliches Teilnehmeranschlusssystem. 13 symbolisiert Teilnehmer bzw. Endstellen hierfür (Telefonbuchsen 13a, 13b). 16 symbolisiert eine Telekommunikationsvermittlungs- und -konfigurationsinstallation, beispielsweise ein Gebäude in einer Stadt. 14 symbolisiert eine Vermittlung, die die herkömmlichen Vermittlungen von analogen Telekommunikationsdiensten (Fax, analoge Telefonie) nach Maßgabe der jeweiligen Telefonnummer bewirkt. 15 ist der Zugangsmanager für digitale Telekommunikationsdienste (digital subscriber line access multiplexer - DSLAM). 17 symbolisiert Telekommunikationsfernleitungen, die zu anderen Telekommunikationsvermittlungs- und -konfigurationseinrichtungen laufen. 10 bis 12 symbolisiert den Hauptverteiler, mittels dessen den jeweiligen Dosen 13a, 13b die jeweils vom zugehörigen Teilnehmer gewünschten Dienste zugeordnet werden. 11 ist die vertikale Seite, die die Teilnehmerleitungen 13c sammelt, 12 die horizontale Seite, die die Dienstleitungen 18 sammelt. 10 symbolisiert die Verschaltung zwischen der horizontalen und der vertikalen Seite. Dem Ergebnis nach wird, wenn beispielsweise Teilnehmer 13b eine analoge Leitung wünscht, dessen Anschlussleitung mit einer zur analogen Vermittlung 14 führenden Dienstleitung verbunden. Wenn andererseits beispielsweise Teilnehmer 13a einen digitalen Breitband-Dienst wünscht, wird dessen Teilnehmerleitung mit einer digitalen Leitung verbunden, die zum DSLAM 15 führt. Dies ist durch Verbindungen 10-1 und 10-2 in Fig. 1 symbolisiert.

Technisch betrachtet gibt es zwei unterschiedliche Möglichkeiten, diese Verbindungen zu bewirken. Die eine ist, ein manuell konfigurierbares Rangierfeld vorzusehen, wie dies durch Bezugszeichen 10a symbolisiert ist. Hier werden manuell Leitungen entsprechend den jeweiligen Wünschen verdrahtet. Änderungen sind dementsprechend auch manuell vorzunehmen. Die andere Möglichkeit ist durch 10b symbolisiert, eine Schaltmatrix, in der die m Teilnehmerleitungen 13c von der vertikalen Seite 11 und die n Diensleitungen 18 der horizontalen Seite matrixartig übereinandergelegt sind und so zu m x n Kreuzungspunkten führen, die durch automatische Schalter jeweils untereinander verschaltet werden können. Eine Schaltmatrix 10b weist dementsprechend m x n Schalter entsprechenden den Kreuzungspunkten auf, und eine Steuerung 29, die die jeweiligen Schalter geeignet durchschaltet bzw. auftrennt. Mit einer Schaltmatrix kann die Verschaltung von Dienstleitungen 18 mit Teilnehmerleitungen 13c entsprechend den Wünschen der jeweiligen Teilnehmer 13a, 13b automatisch vorgenommen werden, ohne dass ein manueller Eingriff notwendig wäre.

Aus der WO03/065699 ist eine Vorrichtung zum Verwalten und Fernsteuern elektrischer Kennwerte von Kabelpaaren, die mit einer Telefonvermittlung verbunden sind, bekannt. Als bekannte Technik wird in dieser Patentanmeldung ein System beschrieben, bei dem eine Messeinheit über die Vermittlung auf einzelne Teilnehmerleitungen geschaltet werden kann, um diese durchzumessen. In einer weiteren Ausführungsform wird eine ferngesteuerte Test- und Messeinrichtung mit geeigneten Vorrichtungen mit der Rangierstelle verbunden, die die Verbindung mit allen an der Rangierstelle einlaufenden Leitungspaaren und mit Leitungspaaren von der Vermittlung herstellen kann.

Nachteil der Anbingung über die Telefonvermittlung ist, dass damit nur diejenigen Teilnehmerleitungen erreichbar sind, die über die Vermittlung vermittelt werden. Insbesondere digitale Leitungen (DSL) laufen nicht über herkömmliche Vermittlungen und sind auf diese Weise nicht zugänglich. Beim Zugang über die Rangierstelle sind aufwendige Extrainstallationen notwendig oder das manuelle Verbinden der Prüfeinrichtung mit den jeweiligen Leitungen.

Ein weiteres Problem in Telekommunikationssystemen ist, dass häufig nicht bekannt ist, wohin Leitungen, die bei einer Rangierstelle abgehen, teilnehmerseitig führen. Soweit Leitungen im öffentlichen Bereich laufen (von der Rangierstelle bis zu Übergabepunkten an den Kunden) ist der Verlauf noch vergleichsweise gut dokumentiert. In der Sphäre des Kunden allerdings (Wohnanlagen, Firmengebäude) kann wegen kundenseitiger Änderungen die Dokumentation falsch sein, so dass zuletzt nicht bekannt ist, welche Leitungen wohin laufen. Bei der Installation eines Neuanschlusses sieht man dann praktisch kundenseitig eine Telefondose in der Wand und vermittlungsseitig die an der Rangierstelle abgehenden Leitungen, weiß aber nicht, zu welcher abgehenden Leitung die betrachtete Dose in der Wand gehört. Es sind dann aufwändige Maßnahmen erforderlich, um die fehlende Information einzuholen.

Aufgabe der Erfindung ist es, ein Teilnehmeranschlusssystem anzugeben, das in einfacher Weise prüfbar und konfigurierbar ist. Eine weitere Aufgabe der Erfindung ist es, eine Teilnehmerleitung und einen teilnehmerseitigen Abschluss hierfür anzugeben, die in einfacher Weise prüfbar sind. Eine weitere Aufgabe der Erfindung ist es, ein einfaches Verfahren zum Prüfen einer Teilnehmerleitung eines Teilnehmeranschlusses anzugeben.

Diese Aufgabe wird mit den Merkmalen der unabhängigen Patentansprüche gelöst. Abhängige Patentansprüche sind auf bevorzugte Ausführungsformen der Erfindung gerichtet.

Nach der Erfindung wird ein Teilnehmeranschlusssystem angegeben, das die Teilnehmerleitungen 13c mit den Dienstleitungen 18 über eine Schaltmatrix 10b verbindet, wobei eine Steuereinrichtung 29 zum Steuern der Schaltmatrix vorgesehen ist. Es ist weiter eine Aktivierungsschaltung 20 vorgesehen, die über die Schaltmatrix mit einer Teilnehmerleitung 13c verbindbar ist, um einen identifizierbaren Abschluss einer bestimmten Teilnehmerleitung aktivieren zu können. Es kann weiterhin eine erste Prüfschaltung vorgesehen sein, um eine Teilnehmerleitung zu prüfen. Die Prüfschaltung kann auch über die Schaltmatrix mit einer Teilnehmerleitung verbindbar sein. Prüf- und Aktivierungsschaltung können als Baueinheit ausgebildet sein und über einen gemeinsamen Anschluss mit der jeweiligen Teilnehmerleitung vebindbar sein.

Vorzugsweise befinden sich Aktivierungsschaltung und/oder Prüfschaltung am dienstleitungsseitigen Eingang der Schaltmatrix (horizontale Seite 12) und belegen dort entweder einen eigens für sie vorgesehenen Eingang (Spalte) oder können kurzzeitig in eine sonstige der Dienstleistungen eingeschleift werden. Beim Vornehmen einer Prüfung einer Teilnehmerleitung wird dann die Aktivierungsschaltung und/oder die Prüfschaltung über die Schaltmatrix gesteuert durch die Steuerung derselben auf die gewünschte Teilnehmerleitung 13c geschaltet und nimmt dort die gewünschten Maßnahmen vor, insbesondere Aktivieren eines Leitungabschlusses, Messungen, Abfragen einer eindeutigen Kennung und ähnliches.

Ein Abschluss für eine Teilnehmerleitung 13c weist eine Verbindungseinrichtung zum Anschließen des Abschlusses an eine Teilnehmerleitung auf, eine Speichereinrichtung zum Speichern einer individuellen Kennung des Abschlusses, eine Erkennungseinrichtung zum Erkennen eines Aktivierungssignals und eine Ausgabeeinrichtung zur Ausgabe der individuellen Kennung auf die angeschlossene Teilnehmerleitung, insbesondere nachdem der Abschluss durch ein von der Teilnehmerleitung her kommendes Signal aktiviert wurde. Der Abschluss kann beispielsweise auf eine Buchse 13a beim Teilnehmer aufsteckbar sein, oder er kann fest in der Buchse 13a oder an einem Übergabepunkt 13d installiert sein.

Der Abschluss der Teilnehmerleitung 13g kann mit der Aktivierungsschaltung und/oder der Prüfschaltung wie vorher beschrieben zusammenwirken.

Ein Verfahren zum Prüfen einer Teilnehmerleitung mit einem aktivierbaren, individuell identifizierbaren Abschluss weist die Schritte Verbinden der Teilnehmerleitungen mit einer Aktivierungsschaltung mittels der Schaltmatrix, Aussenden eines Aktivierungssignals mit der Aktivierungsschaltung über die Schaltmatrix an die Teilnehmerleitung, Empfangen des Signalrücklaufs von der Teilnehmerleitung auf das Aktivierungssignal hin, und Auswerten des Signalrücklaufs auf. Die Netzkonfiguration kann nach Maßgabe des Prüfungsergebnisses erfolgen.

Nachfolgend werden bezugnehmend auf die Zeichnungen einzelne Ausführungsformen der Erfindung beschrieben. Es zeigen
- Fig. 1: einen bekannte Aufbau eines Teilnehmeranschlusssystems,
- Fig. 2: eine Ausführungsform der Erfindung,
- Fig. 3: eine Variante zu Fig. 2,
- Fig. 4: ein Detail einer Schaltmatrix,
- Fig. 5: eine Aktivierungs- und Prüfschaltung, und
- Fig. 6: einen erfindungsgemäßen Leitungsabschluss.

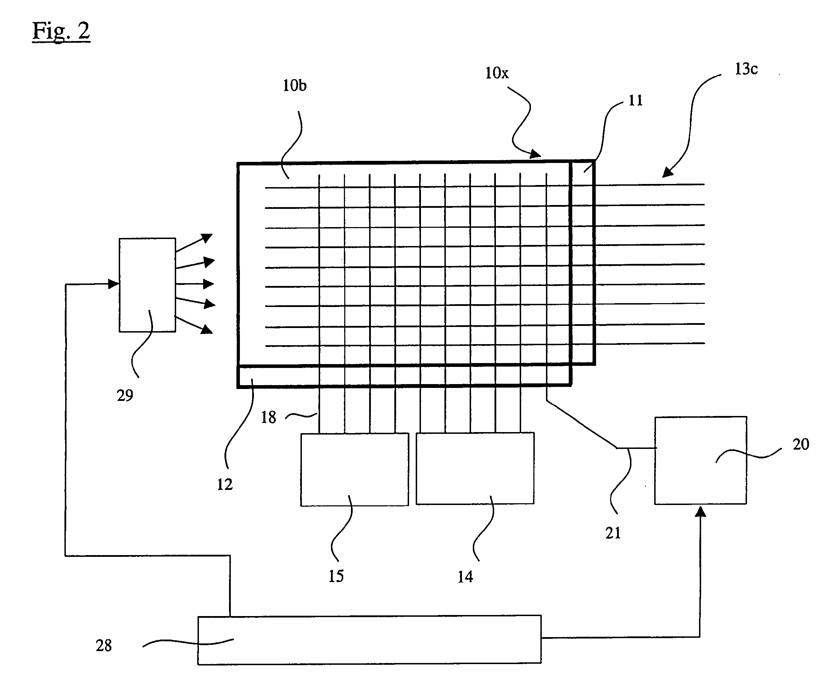

Fig. 2 zeigt eine Ausführungsform der Erfindung. Gleich Bezugsziffern wie in Fig. 1 bedeuten gleiche Komponenten und werden hier nicht nochmals erläutert.

20 ist eine Aktivierungsschaltung und/oder eine Prüfschaltung. Sie belegt eine eigene Spalte 10x der Schaltmatrix 10b, indem sie mittels Leitung 21 an den entsprechenen Eingang an der horizontalen Seite 12 der Schaltmatrix 10b angeschlossen ist. Die Steuerung 29 bewirkt zum einen die Zuordnung der Teilnehmerleitungen 13c zu jeweils einer der Dienstleitungen 18, steuert aber auch das Aufschalten der Aktivierungs- und/oder Prüfschaltung 20 auf eine der Teilnehmerleitungen 13c mittels der Schaltmatrix. Auf diese Weise kann die Schaltung 20 mit einer beliebigen Teilnehmerleitung 13c verbunden werden und mit dieser Leitung geeignet wechselwirken. Falls nötig, kann gleichzeitig die aufgeschaltete Dienstleitung 18 kurzzeitig abgeworfen werden. Dies kann für alle Teilnehmerleitungen 13c unabhängig von der ihnen zugeordneten Dienstart (analog, digital) vorgenommen werden, so dass der Nachteil der Zuordnung über die Vermittlung oder den DSLAM vermieden wird.

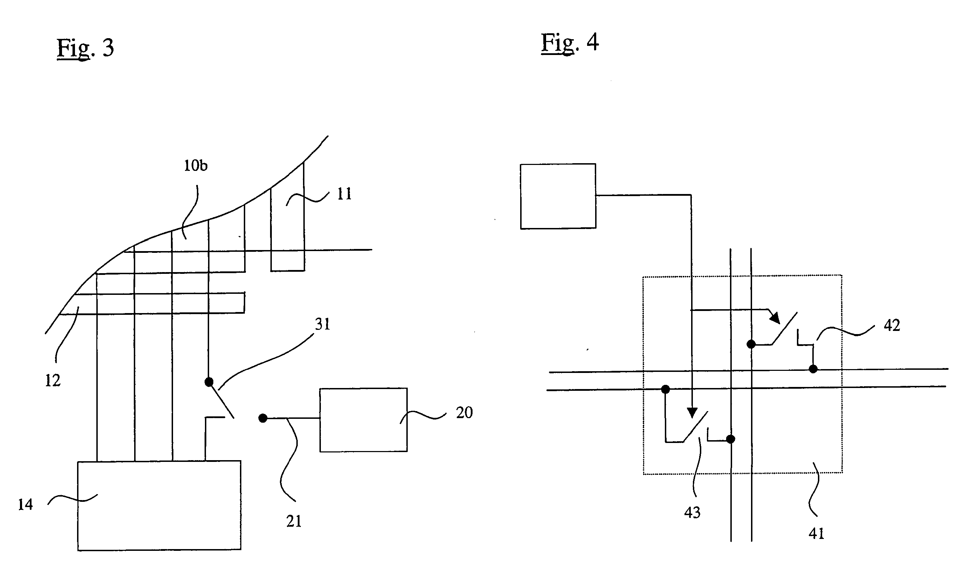

Fig. 3 zeigt eine weitere Ausführungsform. Hier ist die Schaltung 20 nicht an einer eigenene Spalte 10x der Schaltmatrix vorgesehen. Vielmehr kann sie kurzzeitig auf eine sonst anderweitig benutzte Spalte der Schaltmatrix aufgeschaltet werden, indem ein geeigneter Umschalter 31 vorgesehen ist. Vorteil dieser Ausführungsform ist, dass keine eigene Spalte in der Schaltmatrix für die Schaltung 20 vorgesehen sein muss. Nachteilig ist, dass kurzzeitig die aufgetrennte Dienstleitung 18 nicht bestimmungsgemäß verwendet werden kann.

Fig. 4 zeigt ein Detail einer Schaltmatrix. Sie zeigt einen einzelnen Kreuzungspunkt. Zu erkennen ist, dass die bisher als einzelne Striche gezeichneten Leitungen Doppelleitungen sein können, die paarweise miteinander verbunden bzw. voneinander getrennt werden können. Es ist hierfür für jeden Kreuzungspunkt der Matrix eine Schalteinrichtung 41 vorgesehen, die entsprechend der Anzahl der Leitungen (zwei im gezeigten Beispiel) Schalter 42, 43 aufweist, die die senkrechten und vertikalen Leitungen miteinander verbinden oder voneinander trennen können. Vorzugsweise werden die Schalter 42, 43 gemeinsam betätigt. Die Betätigung erfolgt durch ein Steuersignal von der Steuereinrichtung 29, die die Schalter in gewünschter Weise schließt oder öffnet. Die Schalter 42, 43 können Halbleiterschalter oder elektromechanische Schalter sein. Sie werden von der Steuerung 29 angesteuert.

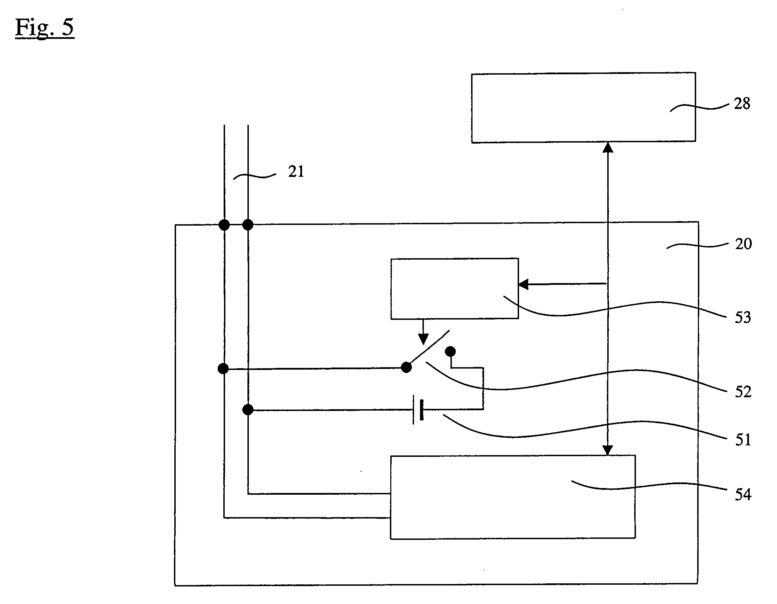

Fig. 5 zeigt eine Ausführungsform der Schaltung 20. Sie weist in Kombination die Aktivierungsschaltung und eine Prüfschaltung auf. Die Auslegung der Aktivierungsschaltung hängt von der Auslegung des Leitungsabschlusses an der zu prüfenden Leitung 13c ab. Grundsätzlich soll sich der Abschluss der Leitung 13c so verhalten, dass er im regulären Telekommunikationsbetrieb nicht in Erscheinung tritt. Dies bedeutet, dass er die regulären Telekommunikationssignale zum Teilnehmer durchschaltet und seinerseits nichts weiter veranlasst. Allerdings soll er unter bestimmten Umständen doch aktiv werden, was durch Aktivierung seitens des Systembetreibers erfolgen kann bzw. soll.

Hierzu ist die Aktivierungsschaltung vonnöten, die in Fig. 5 aus einer Spannungsquelle 51, einem Schalter 52 und einer Steuerung 53 besteht. Die Spannungsquelle 51 kann eine Spannungsquelle sein, die eine Spannung abgibt, die höher ist als die üblicherweise verwendete Spannung, beispielsweise größer 80 V, vorzugsweise größer 100 V, weiter vorzugsweise größer 110 V. Durch Betätigung des Schalters 52 kann diese Spannung kurzzeitig auf die abgehende Leitung 21 gelegt werden, die so über die Schaltmatrix auf die zu prüfende Teilnehmerleitung gelegt wird und auf diese Weise den Leitungsabschluss erreicht. Dieser ist so ausgelegt, dass er das Eintreffen einer besonders hohen Spannung als Aktivierungssignal erkennt und in Antwort darauf bestimmte Maßnahmen vornimmt. Die Spannungsquelle 51 kann eine Gleichspannungs- oder eine Wechselspannungsquelle sein. Es können zur Aktivierung aber auch komplexere Schemata und Signalmuster vorgesehen sein, beispielsweise bestimmte Signalfolgen, Modulationen oder ähnliches. Sie bewirken die Aktivierung des Abschlusses der Teilnehmerleitungen 13c beim Teilnehmer 13a, 13b. Dieser wirkt dann mit der Prüfschaltung in der vorgesehenen Weise zusammen.

Zur Steuerung der Vorgänge in der Schaltung 20 (Aktivierungsschaltung und/oder Prüfschaltung) und deren Aufschaltung auf einzelne Teilnehmerleitungen 13c kann eine überlagerte Steuerung 28 vorgesehen sein, die einerseits die Schaltung 20 anspricht, andererseits die Steuerung 29 der Schaltmatrix und eventuell auch den Umschalter 31 in der Fig. 3. Die überlagerte Steuerung 28 kann auch Auswertungen vornehmen und die Netzkonfiguration steuern.

In Fig. 5 ist 53 eine Steuerung, die allgemein die Aktivierungsschaltung 51 bis 53 steuert. Sie tut dies ggf. nach Maßgabe der überlagerten Steuerung 28. Es kann das An- und Ausschalten des Schalters 52 sein, um die Spannung 51 auf die Leitung 21 zu legen. 54 symbolisiert eine Prüfschaltung. Sie ist dazu ausgelegt, mit dem aktivierten, teilnehmerseitigen Prüfabschluss (sofern vorhanden) der Teilnehmerleitung zusammenzuwirken. Es können hier einfachere oder komplexere Routinen vorgesehen sein, etwa Entgegennahme einer Kennung vom individuell identifizierbaren Prüfabschluss, Widerstandsmessungen, Kurzschluss- und Leerlaufmessungen, Signalmusterprüfungen und ähnliches. Je nach Prüfumfang kann die Prüfschaltung 54 einfach oder komplexer sein. Es kann sich um eine analoge Schaltung handeln oder sie kann digitale Komponenten aufweisen, ggf. mit einem D/A-Wandler zur Leitung 21 hin. Auch die Prüfung durch die Prüfschaltung 54 kann nach Maßgabe der übergeordneten Steuerung 28 erfolgen. Auch können Prüfergebnisse an die übergeordnete Steuerung 28 zurückgemeldet werden.

Ein Teil der von der Prüfschaltung 54 vorgenommenen Prüfung kann die Entgegennahme der von einem Abschluss einer Teilnehmerleitung ausgesendeten Kennung sein, die als codierte, vorzugsweise digitale Signale über die Leitung 21 in die Prüfschaltung 54 einlaufen. Diese Signale können dort formatiert und gewandelt werden. Es können auch Auswertungen oder Weiterleitungen, etwa an die übergeordnete Steuerung 28 vorgenommen werden.

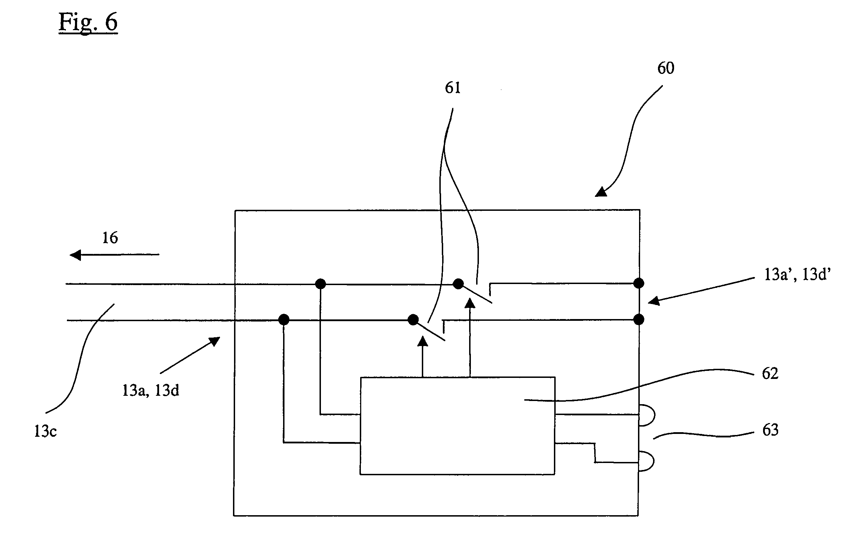

Fig. 6 zeigt eine Ausführungsform des Prüfabschlusses. Der Prüfabschluss 60 kann beispielsweise in der Teilnehmeranschlussbuchse vorgesehen sein oder auf den Teilnehmeranschluss 13a aufgesteckt werden oder am Übergabepunkt 13d zwischen systembetreibereigenen Leitungen und teilnehmereigenen Leitungen eingeschleift werden. Er kann dementsprechend den Teilnehmeranschluss 13a bzw. den Übergabepunkt 13d durchschleifen, so dass diese als 13a', 13d' nach wie vor zur Verfügung stehen. Der Prüfabschluss kann einen oder zwei Schalter 61 aufweisen, die die Leitungen zum Endgerät hin öffnen oder schließen können. Im normalen Telekommunikationsbetrieb sind die Schalter 61 geschlossen und ist der Abschluss 60 im übrigen inaktiv, so dass er den normalen Telekommunikationsbetrieb nicht beeinflusst, modifiziert oder stört.

62 ist eine Steuerungs- und Prüfschaltung. Sie kann eine oder mehrere der folgenden Funktionen aufweisen:
- Erkennen eines von der Teilnehmerleitung 13c her einlaufenden Aktivierungssignals und Veranlassen geeigneter Maßnahme in Antwort darauf.
- Aussenden eines Identifizierungssignals auf die Leitung 13c, das vorzugsweise die eindeutige Identifizierung des jeweiligen Individuums des Abschlusses 60 erlaubt. Das Aussenden der Identifizierung kann in Abhängigkeit von bestimmten Bedingungen geschehen, etwa periodisch oder nach erfolgter Aktivierung vom Systembetreiber her wie vorher beschrieben.
- Steuerung der Schalter 61 und weitererer Schalter (Kurzschlussschalter, Einschalten eines Widerstands zwischen die Leitungen), um elektrisch definierte Zustände am Leitungsende herstellen zu können, so dass bestimmte Messungen vorgenommen werden können.
- Aussenden von Signalfolgen auf die Leitung 13c zu Prüf- und Testzwecken. Die Signalfolgen können vorbestimmt sein.
- Zusammenwirken mit einer Prüfschaltung 20, 54, wie weiter oben beschrieben. Das Zusammenwirken kann nach einem vorbestimmten Protokoll erfolgen.
- Deaktivieren des Abschlusses 60 unter vorbestimmten Bedingungen.

Die Schaltung 62 kann digitale Komponenten aufweisen und ggf. einen Digital/Analog-Wandler zur Leitung 13c hin. Sie kann auch einen Speicher aufweisen, in dem zum Beispiel die individuelle Kennung des Abschlusses 60 gespeichert ist, die wie oben erwähnt unter bestimmten Bedingungen auf die Leitung 13c ausgegeben wird. Die Schaltung 62 kann auch einen Prozessor aufweisen.

Der Prüfabschluss 60 ist vorzugsweise individuell identifizierbar. Dies bedeutet, dass jedes Individuum eine eigene Kennung hat, die von der anderer Individuen unterschiedlich ist. Der Prüfabschluss 60 kann fest eingebaut sein, etwa indem er in eine teilnehmerseitige Anschlussdose integriert oder am Übergabepunkt 13d eingeschleift ist.

Der Prüfabschluss 60 kann eine oder mehrere Anzeigeeinrichtungen 63 aufweisen, etwa in Form von Leuchtdioden, ggf. auch mit unterschiedlichen Farben, oder in Form einer komplexeren Anzeige (Flüssigkristall). Es können damit Informationen betreffend den Prüfstatus angezeigt werden. Insbesondere kann angezeigt werden, ob nach der Installation des Prüfanschlusses 60 dieser schon bestimmungsgemäß in Aktion getreten ist, also insbesondere vom Systembetreiber her kommend aktiviert wurde und dementsprechend reagiert hat. Beispielsweise kann eine Anzeigeeinrichtung 63, gesteuert von der Schaltung 62, nach der Installation ein rotes Licht zeigen, das aber nach Aktivierung und Aussenden der Kennung etc. auf Grün umspringt und so anzeigt, dass die Überprüfung vorgenommen wurde und der Prüfabschluss 60 abgenommen werden kann. Bei erneutem Aufstecken kann sich dies wiederholen.

Ein Verfahren zum Prüfen einer Teilnehmerleitung eines Teilnehmeranschlusssystems geht davon aus, dass eine zu prüfende Teilnehmerleitung einen individuell identifizierbaren Abschluss wie eben unter Bezugsziffer 60 beschrieben aufweist. Das veränderliche Verbinden von Dienstleitungen mit Teilnehmerleitungen erfolgt über eine Schaltmatrix. Beim Prüfen werden folgende Schritte vorgenommen: Eine Teilnehmerleitung wird mit einer Aktivierungsschaltung mittels der Schaltmatrix verbunden. Dies kann durch die übergeordnete Steuerung 28 veranlasst werden. Die Aktivierungsschaltung sendet dann ein Aktivierungssignal an die Teilnehmerleitung aus. Auch dies kann durch die übergeordnete Steuerung 28 veranlasst werden. Es wird dann der Signalrücklauf von der Teilnehmerleitung auf das Aktivierungssignal hin empfangen. Insbesondere kann dies den Empfang des die Kennung des identifizierbaren Prüfabschlusses darstellenden Signals umfassen. Dies kann dann an die übergeordnete Steuerung 28 weitergeleitet oder in der Prüfschaltung 20 selbst ausgewertet werden.

Die Auswertung kann eine Überprüfung des Signalrücklaufs bezugnehmend auf ein erwartetes Ergebnis sein. Hierbei kann insbesondere folgendes vorgenommen werden: In einer Datenbank sind schon vorab die vermeintlichen Zuordnungen von abgehenden Teilnehmerleitungen 13c an der vertikalen Seite 11 zu Teilnehmern 13a, 13b gespeichert. Auch gespeichert ist in dieser Datenbank welche Kennung der Prüfabschluss dieses Teilnehmers hat bzw. haben müsste. Es wird dann zu der von Schaltmatrix angesteuerten Teilnehmerleitung die erwartete Kennung mit der tatsächlich empfangenen Kennung verglichen, um zu überprüfen, ob der Eintrag in der Datenbank richtig ist.

In einer anderen Ausführungsform kann die erwartete Kennung von der Prüfschaltung zum identifizierbaren Prüfabschluss übertragen werden, und dort auf Übereinstimmung mit der darin gespeicherten Kennung überprüft werden, und als Antwortsignal wird ein Richtig/Falsch-Signal zurückgesendet.

Wenn sich ergibt, dass die Kennung des angesteuerten Leitungsabschlusses mit der erwarteten Kennung üereinstimmt, kann der Datenbankeintrag als richtig verifiziert werden und - bei Konfigurationsaufgaben im Netz - eine entsprechende Konfiguration vorgenommen werden, etwa dass ein vom Teilnehmer gewünschter Dienst mittels der Schaltmatrix auf die überprüfte Teilnehmerleitung 13c aufgeschaltet wird. Wenn sich dagegen ergibt, dass die Kennung falsch ist, kann durch Wiederholung des beschriebenen Verfahrens auf anderen Teilnehmerleitungen die richtige Teilnehmerleitung gesucht werden, so dass diese zuletzt, wenn sie gefunden wurde, den gewünschten Dienst aufgeschaltet bekommen kann.

Auf diese Weise kann ein Netz vollautomatisch getestet und konfiguriert werden.

In einer Ausführungsform der Erfindung kann der identifizierbare Prüfabschluss von einem an den Teilnehmeranschluss angeschlossenen Rechner emuliert werden. Der Rechner verhält sich dann - veranlasst durch eine geeignete Steuerung - so, als ob er ein durch Hardware gebauter Prüfabschluss sei. Es können dann in vielerlei Hinsicht gleiche Ergebnisse wie bei der hardwaremäßigen Implementation erreicht werden. Unter Umständen nicht möglich ist dann allerdings das Trennen, Kurzschließen oder Beaufschlagen der Leitung mit einem Widerstand. Die Emulation kann bezugnehmend auf eine dem Teilnehmer insbesondere zu Prüfzwecken mitgeteilte Kennung erfolgen.

## Patentansprüche

1. Teilnehmeranschlusssystem, mit
- mehreren Teilnehmerleitungen (13c) für mehrere Teilnehmer (13a, 13b), die jeweils teilnehmerseitig einen individuell identifizierbaren Abschluss (60) aufweisen oder mit einem individuell identifizierbaren Abschluss (60) verbindbar sind,
- mehreren Dienstleitungen (18), die jeweils mit einer Teilnehmerleitung verbindbar sind,
- einer Schaltmatrix (10), die das verändliche Verbinden von Dienstleitungen und Teilnehmerleitungen erlaubt, und
- einer Steuereinrichtung (28, 29) zum Steuern der Schaltmatrix,
**gekennzeichnet durch**
eine erste Aktivierungsschaltung (20, 51 - 53), die mit einer Teilnehmerleitung zum Aktivieren ihres individuell identifizierbaren Abschlusses verbindbar ist, wobei die Herstellung der Verbindung der ersten Aktivierungsschaltung mit der gewünschten Teilnehmerleitung über eine Auswahl **durch** die Schaltmatrix (10) erfolgt.

2. Teilnehmeranschlusssystem nach Anspruch 1, **gekennzeichnet durch** eine über die Schaltmatrix mit einer Teilnehmerleitung verbindbaren ersten Prüfschaltung (54) zum Prüfen der Teilnehmerleitung.

3. Teilnehmeranschlusssystem nach Anspruch 1 oder 2, **dadurch gekennzeichnet, dass** mehrere Dienstleitungen mit einem ersten Ende mit den Teilnehmerleitungen verbindbar sind und mit einem zweiten Ende mit einer Vermittlung (14) oder Übertragungseinrichtung verbunden sind, über die eine zweite Aktivierungsschaltung und/oder eine zweite Prüfschaltung mit einer der mehreren Dienstleitungen verbindbar ist.

4. Teilnehmeranschlusssystem nach Anspruch 1,2 oder 3, **dadurch gekennzeichnet, dass** mehrere Dienstleitungen mit einem ersten Ende mit den Teilnehmerleitungen verbindbar sind und mit einem zweiten Ende mit einem Zugangsmultiplexer (15) verbunden sind, über den eine dritte Aktivierungsschaltung und/oder eine dritte Prüfschaltung mit einer der mehreren Dienstleitungen verbindbar ist.

5. Teilnehmeranschlusssystem nach einem oder mehreren der vorherigen Ansprüche, **dadurch gekennzeichnet, dass** über mehrere unterschiedliche Dienstleitungen mehrere unterschiedliche Dienstarten (ANALOG, ISDN, DSL) zugänglich sind.

6. Teilnehmeranschlusssystem nach einem oder mehreren der vorherigen Ansprüche, **dadurch gekennzeichnet, dass** die Schaltmatrix eine Relais- oder Halbleiterschaltermatrix aufweist, wobei die Relais oder Halbleiterschalter von der Steuereinrichtung gesteuert werden.

7. Teilnehmeranschlusssystem nach einem oder mehreren der vorherigen Ansprüche, **gekennzeichnet durch** eine Auswerteeinrichtung (54) mit einer Empfangseinrichtung zum Empfangen des Signalrücklaufs von der Teilnehmerleitung auf das Aktivierungssignal hin, und einer Vergleichseinrichtung zum Vergleichen des Signalrücklaufs mit einem erwarteten Ergebnis.

8. Teilnehmeranschlusssystem nach Anspruch 7, **dadurch gekennzeichnet, dass** die Auswerteeinrichtung (54) eine Baueinheit (20) mit der Aktivierungsschaltung (51 - 53) ist und eine Schnittstelle zur Steuerung (28) hat.

9. Teilnehmeranschlusssystem nach einem oder mehreren der vorherigen Ansprüche, **gekennzeichnet durch** eine Speichereinrichtung zum Speichern von Daten betreffend die Verlegung von Teilnehmerleitungen und die Kennungen der individuell identifizierbaren Abschlüsse.

10. Abschluss (60) für eine Teilnehmerleitung eines Teilnehmeranschlusssystems,
**gekennzeichnet durch**
eine Verbindungseinrichtung zum Anschließen des Abschlusses an eine Teilnehmerleitung (13c),
einer Speichereinrichtung zum Speichern einer individuellen Kennung des Abschlusses, und
einer Ausgabeeinrichtung, die zur Ausgabe der individuellen Kennung auf die angeschlossene Teilnehmerleitung ausgelegt ist.

11. Abschluss nach Anspruch 10, **gekennzeichnet durch** eine Aktivierungseinrichtung, die ein Aktivierungssignal von der angeschlossenen Teilnehmerleitung erkennt und daraufhin die Ausgabe der individuellen Kennung auf die angeschlossene Teilnehmerleitung veranlasst.

12. Abschluss nach Anspruch 10 oder 11, **gekennzeichnet durch** eine Anzeigeeinrichtung (63), die anzeigt, dass eine Ausgabe der individuellen Kennung auf die angeschlossene Teilnehmerleitung erfolgt ist.

13. Abschluss nach einem oder mehreren der Ansprüche 10 bis 12, **gekennzeichnet durch** einen Stecker, mit dem er in eine Anschlussdose der Teilnehmerleitung eingesteckt werden kann.

14. Abschluss nach Anspruch 13, **dadurch gekennzeichnet, dass** er eine oder mehrere Dosen zum Anschluss von Endgeräten aufweist.

15. Abschluss nach einem oder mehreren der Ansprüche 10 bis 14, **dadurch gekennzeichnet, dass** er eine oder mehrere der folgenden Komponenten aufweist:
- eine Durchschleifung der Teilnehmerleitung,
- eine Unterbrechungseinrichtung (61) für die Teilnehmerleitung,
- eine Kurzschlusseinrichtung für die Teilnehmerleitung,
- eine Widerstandseinrichtung, die zwischen die Leitungen der Teilnehmerleitung einen Widerstand schalten kann,
- eine Sendeeinrichtung für Signale und Signalfolgen,
- eine Speichereinrichtung zum Speichern von Steuerungsdaten,
- eine Vergleichseinrichtung zum Vergleichen empfangener mit gespeicherten Daten,
- eine Schaltung, insbesondere einen Prozessor (62) zur Steuerung und/oder Messung und/oder Signalabgabe und/oder Signalvergleich.

16. Verfahren zum Prüfen einer Teilnehmerleitung eines Teilnehmeranschlusssystems, das für mehrere Teilnehmer mehrere Teilnehmerleitungen hat, von denen mindestens einige teilnehmerseitig mit einem aktivierbaren und individuell identifizierbaren Abschluss abgeschlossen sind, mehrere Dienstleitungen, die jeweils mit einer Teilnehmerleitung verbindbar sind, eine Schaltmatrix, die das veränderliche Verbinden von Dienstleitungen und Teilnehmerleitungen erlaubt, und eine Steuereinrichtung zum Steuern der Schaltmatrix,
**gekennzeichnet durch** die Schritte
- Wahl der Verbindung einer Teilnehmerleitung mit einer Aktivierungsschaltung mittels der Schaltmatrix,
- Aussenden eines Aktivierungssignals an die Teilnehmerleitung mit der Aktivierungsschaltung über die Schaltmatrix,
- Empfangen des Signalrücklaufs von der Teilnehmerleitung auf das Aktivierungssignal hin, und
- Auswerten des Signalrücklaufs Bezug nehmend auf ein erwartetes Ergebnis.

17. Verfahren nach Anspruch 16, **dadurch gekennzeichnet, dass** das Verbinden der Teilnehmerleitung mit der Aktivierungsschaltung mittels der Schaltmatrix durch die Steuerschaltung veranlasst wird.

18. Verfahren nach Anspruch 16 oder 17, **dadurch gekennzeichnet, dass** der Signalrücklauf über die Schaltmatrix einer Auswerteeinrichtung zugeführt wird.

19. Verfahren zum Verschalten einer Teilnehmerleitung mit einer Dienstleitung eines Teilnehmeranschlusssystems, das für mehrere Teilnehmer mehrere Teilnehmerleitungen hat, von denen mindestens einige teilnehmerseitig mit einem aktivierbaren und individuell identifizierbaren Abschluss abgeschlossen sind, mehrere Dienstleitungen, die jeweils mit einer Teilnehmerleitung verbindbar sind, eine Schaltmatrix, die das wählbare Verbinden von Dienstleitungen und Teilnehmerleitungen erlaubt, und eine Steuereinrichtung zum Steuern der Schaltmatrix,
**gekennzeichnet durch** die Schritte
- Prüfen einer Teilnehmerleitung mit einem Verfahren nach einem oder mehreren der Ansprüche 16 bis 18, und
- wenn der Signalrücklauf dem erwarteten Ergebnis entspricht, Verschalten der Teilnehmerleitung mit einer Dienstleitung mittels der Schaltmatrix.
